# EUROPÄISCHE PATENTSCHRIFT

(11) **EP 2 936 518 B1**
(45) Veröffentlichungstag und Bekanntmachung des Hinweises auf die Patenterteilung: **22.02.2017**
(21) Anmeldenummer: 13811202.4
(22) Anmeldetag: 18.12.2013
(51) Int. Cl.: H01F 38/14, H01M 2/10, H01M 10/46, H02J 7/02, H02J 7/00

(54) **HANDWERKZEUGAKKU**
RECHARGEABLE HAND TOOL BATTERY
ACCUMULATEUR D'OUTIL PORTATIF

(30) Priorität: 21.12.2012 DE 102012112846; 01.02.2013 DE 102013201706; 17.12.2013 DE 102013226248
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); BREITENBACH, Jan, 70569 Stuttgart (DE); MACK, Juergen, 73035 Goeppingen (DE); KRUPEZEVIC, Dragan, 70565 Stuttgart (DE)
(86) Internationale Anmeldenummer: PCT/EP2013/077134
(87) Internationale Veröffentlichungsnummer: WO 2014/096031

(56) Entgegenhaltungen:
- JP-A- 2005 073 350
- JP-A- 2005 073 350
- US-A1- 2009 237 194
- US-A1- 2009 237 194
- US-A1- 2010 164 431
- US-A1- 2010 237 827
- US-A1- 2012 146 426
- US-A1- 2012 146 426

## Beschreibung

### Stand der Technik

Es ist bereits ein Handwerkzeugakku mit mindestens einem Akkugehäuse, mindestens einer Akkuzelle und zumindest einer Induktivladeeinheit, die zumindest eine Induktivladespule zu einer Aufladung der mindestens einen Akkuzelle aufweist, vorgeschlagen worden.

Ein solcher aus dem Stand der Technik bekannter Handwerkzeugakku wird in dem Dokument JP2005073350 A beschrieben. Offenbarung der Erfindung

Die Erfindung wird durch die in Anspruch 1 genannten Merkmale definert und geht aus von einem Handwerkzeugakku mit mindestens einem Akkugehäuse, mindestens einer Akkuzelle und zumindest einer Induktivladeeinheit, die zumindest eine Induktivladespule zu einer Aufladung der mindestens einen Akkuzelle aufweist.

Es wird vorgeschlagen, dass das Akkugehäuse zumindest eine Gehäuseanformung aufweist, die zumindest teilweise von einem Bereich einer Induktivladeseite des Akkugehäuses begrenzt ist. Unter einem "Handwerkzeugakku" soll insbesondere eine Vorrichtung mit mindestens einer Akkuzelle und einer Elektronik zu einer Auf- und Entladung der Akkuzelle verstanden werden, wobei die Vorrichtung dazu vorgesehen ist, zumindest ein Handwerkzeug mit elektrischer Energie zu versorgen. Bevorzugt ist der Handwerkzeugakku dazu vorgesehen, mit dem Handwerkzeug durch einen Bediener insbesondere werkzeuglos lösbar zu koppeln. Alternativ könnte der Handwerkzeugakku in das Handwerkzeug integriert sein. Insbesondere soll unter einem "Handwerkzeug" in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer, ein Multifunktionswerkzeug, ein Baustellenmessgerät und/oder ein Gartengerät wie eine Hecken-, Strauch- und/oder Grasschere, verstanden werden. Insbesondere soll unter einem "Akkugehäuse" ein Bauteil oder eine Baugruppe verstanden werden, das oder die dazu vorgesehen ist, zumindest die Induktivladeeinheit und die Akkuzellen gegenüber der Umgebung vor einer mechanischen Beschädigung und/oder Verschmutzung zu schützen. Insbesondere definiert das Akkugehäuse eine Form und eine Größe des Handwerkzeugakkus. Vorzugsweise weist das Akkugehäuse eine Befestigungsvorrichtung zu einer Befestigung des Handwerkzeugakkus an dem Handwerkzeug auf. Vorteilhaft weist das Akkugehäuse Kontaktaussparungen auf, durch die ein elektrischer Kontakt zwischen dem Handwerkzeug und zumindest der Akkuzelle herstellbar ist. Unter einer "Akkuzelle" soll insbesondere ein Mittel verstanden werden, das zu einer elektrochemischen Speicherung elektrischer Energie mittels einer reversiblen Reaktion vorgesehen ist. Die Akkuzelle kann beispielsweise von einer Bleiakkuzelle, einer NiCd-Akkuzelle, einer NiMH-Akkuzelle, bevorzugt jedoch von einer lithiumbasierten Akkuzelle, gebildet sein. Die Akkuzellen können unterschiedliche Nennspannungen aufweisen, beispielsweise Nennspannungen von 1,2 V, 1,5 V oder vorteilhaft ca. 3,6 V. Bevorzugt weisen die Akkuzellen eine Zylinderform auf, wobei andere, dem Fachmann als sinnvoll erscheinende Formen möglich sind. Vorteilhaft weist der Handwerkzeugakku mehrere Akkuzellen auf, beispielsweise zumindest zwei, drei, vier, fünf oder zehn. Insbesondere sind die Akkuzellen parallel und/oder in Reihe geschaltet. Insbesondere soll unter einer "Induktivladeeinheit" eine Einheit zur Aufladung der Akkuzelle verstanden werden, die einen Ladestrom über Induktion empfängt und die zumindest die Induktivladespule und eine Induktivladeelektronik umfasst. Bevorzugt umfasst die Induktivladeeinheit zudem zumindest einen Spulenkern zu einer Erhöhung einer Induktivität der zumindest einen Induktivladespule. Vorteilhaft weist die Induktivladeeinheit einen Spulenträger auf, der die Induktivladespule relativ zu dem Spulenkern positioniert. Vorteilhaft ist die Induktivladeeinheit dazu vorgesehen, zur Steuerung der Ladung und insbesondere zur Fremdobjekterkennung mit einem Induktivladegerät der Induktivladevorrichtung zu kommunizieren. Unter einer "Induktivladespule" soll in diesem Zusammenhang insbesondere eine Spule mit mindestens einer Wicklung aus einem elektrisch leitenden Material verstanden werden, die dazu vorgesehen ist, in zumindest einem Betriebszustand eine elektrische Energie, die bei einem Ladevorgang von einer Induktivladespule eines Induktivladegeräts gesendet wird, zu empfangen und über die Induktivladeelektronik einer Akkuzelle zuzuführen. Insbesondere ist die Induktivladespule dazu vorgesehen, ein elektromagnetisches Wechselfeld in einen elektrischen Wechselstrom umzuwandeln und/oder umgekehrt. Bevorzugt weist das Wechselfeld eine Frequenz von 10 - 500 kHz, besonders bevorzugt von 100 - 120 kHz, auf. Insbesondere soll unter einer "Aufladung" ein Vorgang verstanden werden, bei dem eine Energie induktiv von dem Induktivladegerät auf den Handwerkzeugakku übertragen wird.

Unter einer "Gehäuseanformung" soll insbesondere ein von einer Grundform abweichender formgebender Bereich des Akkugehäuses verstanden werden. Insbesondere ist die Gehäuseanformung vorteilhaft vollständig fest mit einem Rest des Akkugehäuses verbunden. Besonders vorteilhaft ist die Gehäuseanformung insbesondere vollständig einstückig mit dem Rest des Akkugehäuses ausgebildet. Unter "zumindest teilweise" soll insbesondere verstanden werden, dass zumindest 10 %, vorteilhaft zumindest 25 %, der Außenseiten der Gehäuseanformung zumindest im Wesentlichen in einer Ebene liegen, die von der Induktivladeseite aufgespannt wird. Insbesondere soll unter "zumindest im Wesentlichen" in diesem Zusammenhang um weniger als 5 mm, vorteilhaft weniger als 2 mm, entfernt verstanden werden. Insbesondere soll unter einer "Induktivladeseite" eine Außenseite des Akkugehäuses verstanden werden, durch die die Induktivladespule die magnetische Energie empfängt. Insbesondere ist die Induktivladeseite senkrecht zu einer Wicklungsachse der Induktivladespule ausgerichtet und am nächsten zu der Induktivladespule angeordnet. Unter einem "Bereich einer Induktiviadeseite" soll insbesondere eine Teilfläche der die Induktivladeseite bildenden Fläche verstanden werden. Insbesondere soll unter dem Begriff "begrenzen" verstanden werden, dass die Teilfläche der die Induktivladeseite bildenden Fläche eine Außenseite der Gehäuseanformung bildet. Insbesondere soll unter "formgebend" in diesem Zusammenhang verstanden werden, dass die Gehäuseanformung eine äußere Form des Handwerkzeugakkus wesentlich beeinflusst. Bevorzugt weist die Gehäuseanformung ein von einer Grundform des Akkugehäuses abweichendes Volumen auf, das mehr als 1 cm³, besonders vorteilhaft mehr als 2 cm³, beträgt. Vorteilhaft ist zumindest eine Außenseite der Gehäuseanformung um mehr als 0,5 mm, vorteilhaft mehr als 1,5 mm, besonders vorteilhaft mehr als 4 mm, von einer parallelen Hauptaußenseite des Akkugehäuses in einer Richtung senkrecht zu der Hauptaußenseite beabstandet angeordnet. Unter einer "Hauptaußenseite" soll insbesondere eine Außenfläche des Handwerkzeugakkus verstanden werden, die weniger als 30 Grad gewölbt ist und die insgesamt mehr als 10 % einer Gesamtaußenfläche des Handwerkzeugakkus aufweist. Durch die erfindungsgemäße Ausgestaltung des Handwerkzeugakkus kann ein besonders stabiler Stand auf der Induktivladeseite erreicht werden.

In einer weiteren Ausgestaltung wird vorgeschlagen, dass die Gehäuseanformung zur Befestigung an einer Induktivladevorrichtung vorgesehen ist die Gehäuseanformung, wodurch eine unbeabsichtigte Bewegung des Handwerkzeugakkus bei einem Ladevorgang vorteilhaft vermieden werden kann. Vorzugsweise ist die Gehäuseanformung dazu vorgesehen, eine Kraft aufzunehmen, die zumindest das Akkugehäuse relativ zu der Induktivladevorrichtung anordnet. Vorzugsweise ist die Gehäuseanformung als eine passive Gehäuseanformung ausgebildet, was insbesondere heißt, dass die Gehäuseanformung bei einem Befestigungsvorgang relativ zu der Induktivladespule unbewegt bleibt. Alternativ könnte die Gehäuseanformung zumindest teilweise bei dem Befestigungsvorgang ausgelenkt werden. Unter einer "Befestigung" soll insbesondere verstanden werden, dass bei einem Ladevorgang, um den Handwerkzeugakku von der Induktivladevorrichtung zu trennen, eine auf den Handwerkzeugakku und die Induktivladevorrichtung aufgebrachte Kraft benötigt wird, die größer als eine Gewichtskraft des Handwerkzeugakkus ist. Insbesondere soll unter einer "Induktivladevorrichtung" eine Vorrichtung verstanden werden, die zumindest ein Induktivladegerät und vorteilhaft eine Befestigungsvorrichtung aufweist. Insbesondere ist die Befestigungsvorrichtung zumindest dazu vorgesehen, den Handwerkzeugakku an dem Induktivladegerät zu befestigen.

Des Weiteren wird vorgeschlagen, dass die Gehäuseanformung als eine erste Gehäuseanformung ausgebildet ist, die zur Befestigung in einer Richtung parallel zu einer Wicklungsachse der Induktivladespule vorgesehen ist, oder als eine zweite Gehäuseanformung ausgebildet ist, die zur Befestigung in zumindest einer Richtung senkrecht zu der Wicklungsachse der Induktivladespule vorgesehen ist, wodurch eine vorteilhafte Anordnung oder eine vorteilhafte Befestigung des Handwerkzeugakkus bei einem Ladevorgang erreicht werden kann. Unter einer "Wicklungsachse" soll insbesondere eine Gerade verstanden werden, die parallel zu einer Richtung der magnetischen Feldlinien in einem Mittelpunkt der Induktivladespule ausgerichtet ist. Insbesondere ist die Wicklungsachse senkrecht zu einer Haupterstreckungsebene der Induktivladespule ausgerichtet. Insbesondere verlaufen Wicklungen der Induktivladespule tangential zu der Wicklungsachse. Unter der Wendung "Befestigung in einer Richtung parallel zur Wicklungsachse" soll insbesondere verstanden werden, dass die erste Gehäuseanformung dazu vorgesehen ist, eine Befestigungskraft, die einen Rest des Handwerkzeugakkus auf die Induktivladespule des Induktivladegeräts zu drückt, zu bewirken. Insbesondere soll unter der Wendung "in einer Richtung senkrecht zu einer Wicklungsachse" verstanden werden, dass die zweite Gehäuseanformung dazu vorgesehen ist, eine Positionierungskraft auf einen Rest des Handwerkzeugakkus zu bewirken, die einer seitlichen Verschiebung des Handwerkzeugakkus relativ zu dem Induktivladegerät entgegenwirkt.

Ferner wird vorgeschlagen, dass das Akkugehäuse die erste Gehäuseanformung und die zweite Gehäuseanformung aufweist, wodurch eine unbeabsichtigte Bewegung des Handwerkzeugakkus bei einem Ladevorgang besonders zuverlässig vermieden werden kann. Alternativ könnte das Akkugehäuse nur die erste Gehäuseanformung aufweisen oder nur die zweite Gehäuseanformung aufweisen. Die Wortwahl "die erste" und "die zweite" dient lediglich der Unterscheidung der Mittel und stellt keine Priorisierung oder Reihenfolge dar.

Zudem wird erfindungsgemäß vorgeschlagen, dass die Induktivladespule zumindest teilweise innerhalb der ersten Gehäuseanformung angeordnet ist, wodurch ein vorteilhaft großer Spulendurchmesser platzsparend erreicht werden kann. Insbesondere soll unter der Wendung "zumindest teilweise innerhalb angeordnet" verstanden werden, dass zumindest ein Punkt der Spule von der Gehäuseanformung umschlossen wird. Insbesondere schneidet zumindest eine Ebene, die von der Hauptaußenseite des Akkugehäuses aufgespannt ist, die Induktivladespule.

Des Weiteren wird vorgeschlagen, dass die erste Gehäuseanformung zumindest einen ersten Befestigungsbereich und einen zweiten Befestigungsbereich aufweist, die an gegenüberliegenden Seiten einer Induktivladeseite des Akkugehäuses angeordnet sind, wodurch konstruktiv einfach eine stabile Befestigung möglich ist. Unter einem "Befestigungsbereich" soll insbesondere ein zusammenhängender Bereich verstanden werden, auf den direkt eine Befestigungskraft wirkt. Zudem könnte die Gehäuseanformung zumindest einen weiteren Befestigungsbereich umfassen. Vorteilhaft jedoch besteht die erste Gehäuseanformung genau aus den zwei Befestigungsbereichen. Insbesondere sind der erste Befestigungsbereich und der zweite Befestigungsbereich voneinander beabstandet angeordnet. Insbesondere soll unter der Wendung "an gegenüberliegenden Seiten angeordnet" verstanden werden, dass ein Mittelpunkt der Induktivladeseite zwischen den zwei Befestigungsbereichen angeordnet ist.

Weiterhin wird vorgeschlagen, dass der erste Befestigungsbereich und/oder der zweite Befestigungsbereich als Aufnahmeschulter ausgebildet ist/sind, wodurch eine Befestigung besonders vorteilhaft realisierbar ist. Unter einer "Aufnahmeschulter" soll insbesondere eine über eine Grundform des Akkugehäuses hinausgehende längliche Anformung verstanden werden. Vorzugsweise unterscheiden sich eine Tiefe und eine Breite senkrecht zu einer Haupterstreckungsrichtung der Aufnahmeschulter um weniger als 50 %.

In einer vorteilhaften Ausbildung der Erfindung wird vorgeschlagen, dass die zweite Gehäuseanformung dazu vorgesehen ist, zumindest die Induktivladespule für die Aufladung zu positionieren, wodurch eine besonders effektive Energieübertragung möglich ist. Insbesondere soll unter dem Begriff "positionieren" verstanden werden, dass die zweite Gehäuseanformung eine Anordnung der Induktivladespule des Handwerkzeugakku relativ zu der Induktivladespule des Induktivladegeräts in zumindest einem Betriebszustand bestimmt.

Des Weiteren wird vorgeschlagen, dass die zweite Gehäuseanformung zumindest eine Formschlussfläche aufweist, die sich zumindest im Wesentlichen entlang einer Mantelfläche erstreckt, wodurch konstruktiv einfach eine vorteilhafte Positionierung möglich ist. Unter einer "Formschlussfläche" soll insbesondere eine Fläche verstanden werden, die dazu vorgesehen ist, eine formschlüssige Verbindung zwischen dem Handwerkzeugakku und dem Induktivladegerät herzustellen. Insbesondere begrenzt die Gehäuseanformung einen zylinderförmigen Bereich oder vorteilhaft ist die Gehäuseanformung zumindest teilweise zylinderförmig ausgebildet. Vorteilhaft ist die Gehäuseanformung an das Akkugehäuse angeformt. Insbesondere soll unter der Wendung "sich entlang einer Mantelfläche erstrecken" verstanden werden, dass die Formschlussfläche einen Verlauf aufweist, der zumindest im Wesentlichen einer Mantelfläche eines Zylinders entspricht.

Ferner wird vorgeschlagen, dass die zweite Gehäuseanformung zumindest eine Fremdkörperaufnahmeausnehmung aufweist, die zur Reduzierung eines Induktivladeabstands vorgesehen ist, wodurch ein negativer Effekt von insbesondere unmagnetischen Fremdkörpern minimiert werden kann. Unter einer "Fremdkörperaufnahmeausnehmung" soll insbesondere ein von der Gehäuseanformung begrenzter Bereich verstanden werden, der dazu vorgesehen ist, Fremdköper aufzunehmen, die bei einem Ladevorgang zwischen dem Handwerkzeugakku und dem Induktivladegerät angeordnet sind. Insbesondere soll unter einer "Reduzierung" verstanden werden, dass durch die Aufnahme der Fremdkörper der Induktivladeabstand in zumindest einem Betriebszustand geringer ist als ohne die Fremdkörperaufnahmeausnehmung. Insbesondere soll unter einem "Induktivladeabstand" ein Abstand zwischen der Induktivladespule des Handwerkzeugakkus und der Induktivladespule des Induktivladegeräts verstanden werden.

Des Weiteren geht die Erfindung aus von einem System mit einem erfindungsgemäßen Handwerkzeugakku und einer Induktivladevorrichtung.

Des Weiteren wird vorgeschlagen, dass die Induktivladevorrichtung zumindest ein erstes Befestigungsmittel aufweist, das dazu vorgesehen ist, die erste Gehäuseanformung des Handwerkzeugakkus kraftschlüssig und/oder formschlüssig zu befestigen, wodurch konstruktiv einfach eine vorteilhafte Befestigung möglich ist. Insbesondere soll unter dem Begriff "kraftschlüssig befestigen" verstanden werden, dass das erste Befestigungsmittel der Induktivladevorrichtung in zumindest einem Betriebszustand eine Kraft auf eine erste Gehäuseanformung des Handwerkzeugakkus bewirkt, wobei die Kraft eine Reibung verursacht, die den Handwerkzeugakku relativ zu dem Induktivladegerät befestigt. Insbesondere soll unter dem Begriff "formschlüssig befestigen" verstanden werden, dass das erste Befestigungsmittel der Induktivladevorrichtung eine Form aufweist, die eine Bewegung des Handwerkzeugakkus relativ zu dem Induktivladegerät verhindert.

Ferner wird vorgeschlagen, dass die Induktivladevorrichtung zumindest ein zweites Befestigungsmittel aufweist, das dazu vorgesehen ist, den Handwerkzeugakku mittels dessen erster Gehäuseanformung für die Aufladung zu positionieren, wodurch eine besonders effektive Ladung erreicht werden kann. Unter der Wendung "mittels dessen Gehäuseanformung" soll insbesondere verstanden werden, dass das zweite Befestigungsmittel der Induktivladevorrichtung und die zweite Gehäuseanformung des Handwerkzeugakkus dazu vorgesehen sind, zur Positionierung des Handwerkzeugakkus zusammenzuwirken.

Zudem wird vorgeschlagen, dass die zweite Gehäuseanformung des Handwerkzeugakkus und das zweite Befestigungsmittel der Induktivladevorrichtung voneinander abweichende Grundformen aufweisen, wodurch die zweite Gehäuseanformung des Handwerkzeugakkus und das zweite Befestigungsmittel mit einer vorteilhaften Haptik miteinander verbunden werden können. Insbesondere soll unter "voneinander abweichenden Grundformen" verstanden werden, dass die zweite Gehäuseanformung des Handwerkzeugakkus und das zweite Befestigungsmittel der Induktivladevorrichtung zwei unterschiedliche geometrische Formen aufweisen.

Des erfindungsgemäße System sowie dessen erfindungsgemäße Komponenten soll/sollen hierbei nicht auf die oben beschriebene Anwendung und Ausführungsform beschränkt sein. Insbesondere können das erfindungsgemäße System sowie dessen erfindungsgemäße Komponenten zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein System mit einem erfindungsgemäßen Handwerkzeugakku und einer Induktivladevorrichtung,
- Fig. 2: ein Handwerkzeug und den Handwerkzeugakku des Systems aus Figur 1,
- Fig. 3: eine Frontalansicht des Handwerkzeugakkus aus Figur 1,
- Fig. 4: eine Ansicht einer Induktivladeseite des Handwerkzeugakkus aus Figur 1,
- Fig. 5: einen ersten Schnitt des Handwerkzeugakkus aus Figur 1,
- Fig. 6: einen zweiten Schnitt des Handwerkzeugakkus aus Figur 1,
- Fig. 7: eine Induktivladeeinheit des Handwerkzeugakkus aus Figur 1 in einer perspektivischen Explosionsdarstellung,
- Fig. 8: eine Befestigungsvorrichtung der Induktivladevorrichtung aus Figur 1,
- Fig. 9: ein Induktivladegerät der Induktivladevorrichtung aus Figur 1 und
- Fig. 10: eine alternative oder zusätzliche Befestigungsvorrichtung der Induktivladevorrichtung aus Figur 1.

### Beschreibung des Ausführungsbeispiels

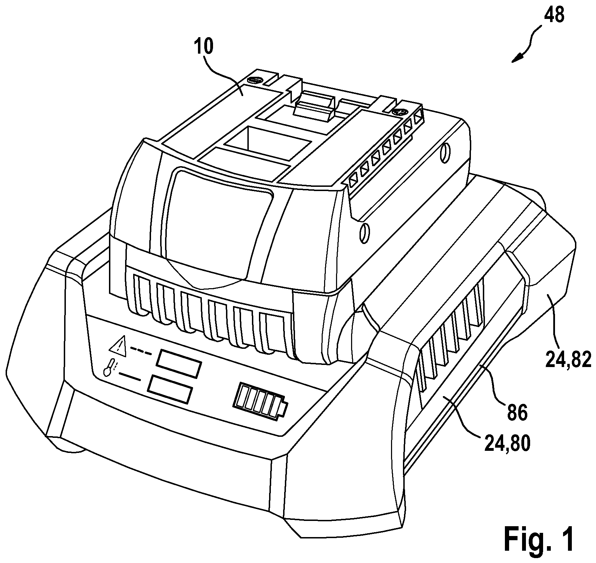

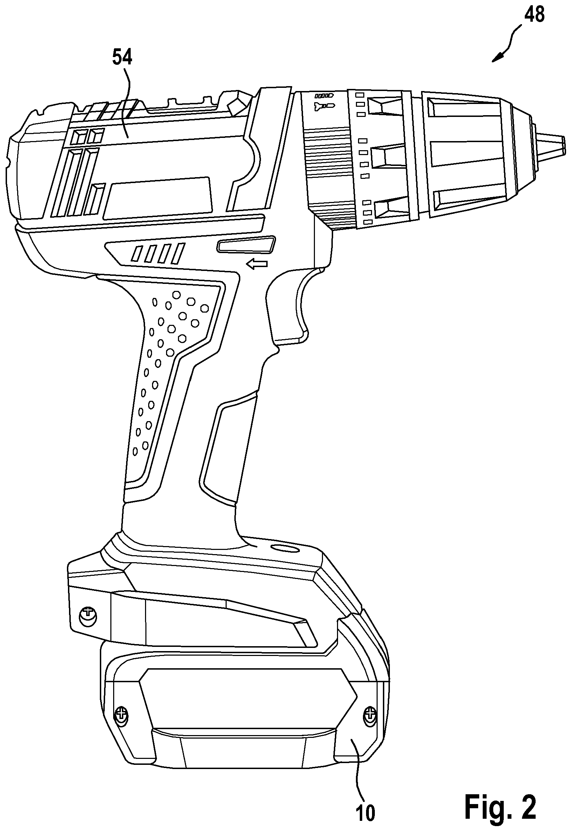

Die Figuren 1 und 2 zeigen ein erfindungsgemäßes System 48 mit einem Handwerkzeugakku 10, einer Induktivladevorrichtung 24 und einem Handwerkzeug 54. Der Handwerkzeugakku 10 ist dazu vorgesehen, das Handwerkzeug 54 mit einer elektrischen Betriebsenergie zu versorgen. Die Induktivladevorrichtung 24 ist dazu vorgesehen, den Handwerkzeugakku 10 induktiv zu laden. Das Handwerkzeug 54 ist als eine Handwerkzeugmaschine, hier als ein Bohrschrauber, ausgebildet.

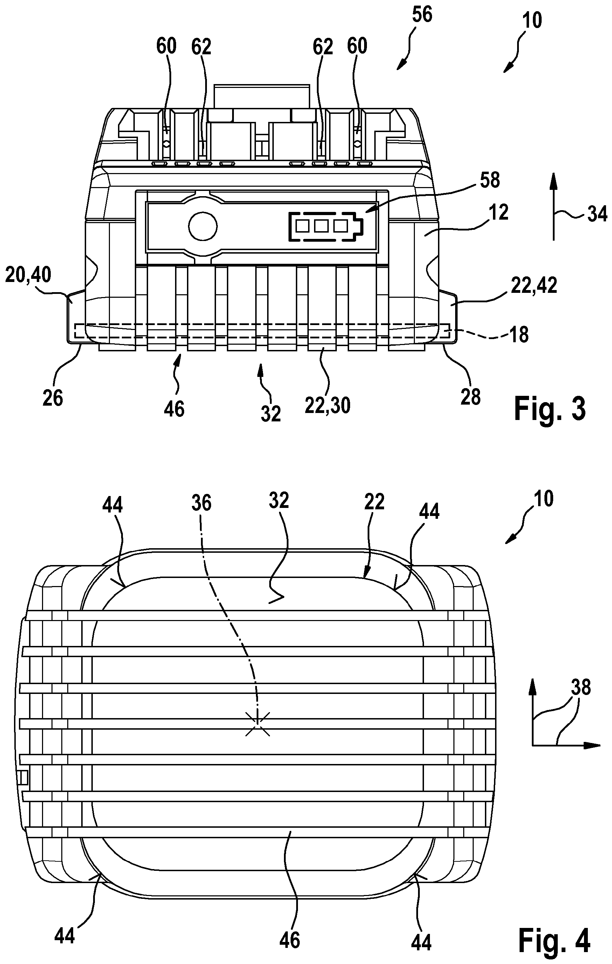

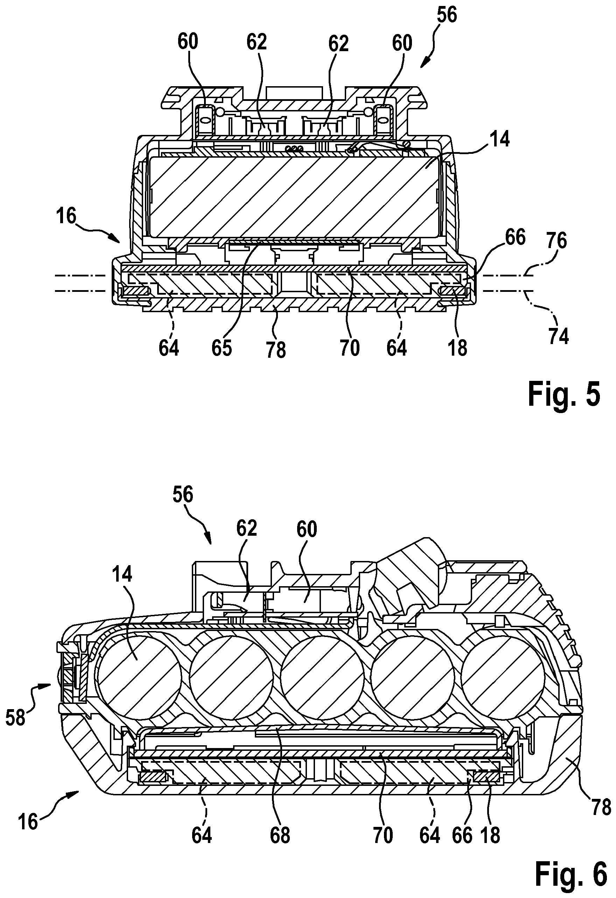

Die Figuren 3 bis 6 zeigen den Handwerkzeugakku 10. Der Handwerkzeugakku 10 weist ein Akkugehäuse 12, mehrere Akkuzellen 14, eine Induktivladeeinheit 16, eine Handwerkzeugschnittstelle 56 und eine Ladezustandsanzeige 58 auf. Die Ladezustandsanzeige 58 ist dazu vorgesehen, einen Ladezustand der Akkuzellen 14 einem Bediener anzuzeigen. Die Handwerkzeugschnittstelle 56 ist dazu vorgesehen, das Handwerkzeug 54 mechanisch und elektrisch zu kontaktieren. Bei einem Betrieb des Handwerkzeugs 54 stellt der Handwerkzeugakku 10 eine Betriebsenergie des Handwerkzeugs 54 bereit. Die Handwerkzeugschnittstelle 56 ist auf einer Seite angeordnet, die einer Induktivladeseite 32 des Akkugehäuses 12 abgewandt angeordnet ist, und zwar ist die Seite der Induktivladeseite 32 gegenüberliegend angeordnet. Die Handwerkzeugschnittstelle 56 umfasst Kontakte 60 zur Energieübertragung und Kontakte 62 zur Kommunikation.

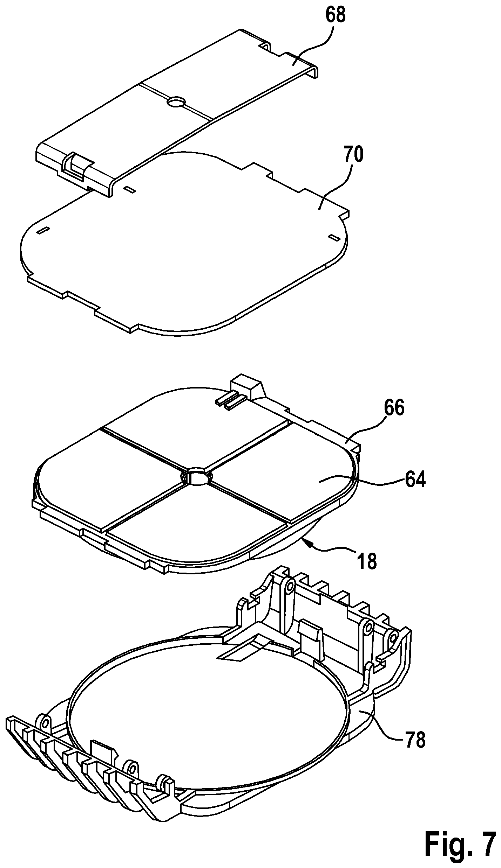

Die in Figur 7 dargestellte Induktivladeeinheit 16 umfasst eine Induktivladespule 18, einen Spulenkern 64, einen Spulenträger 66, ein Wärmeausgleichsmittel 68 und eine Induktivladeelektronik 70. Die Induktivladeelektronik 70 ist dazu vorgesehen, den Ladevorgang der Akkuzelle 14 zu steuern. Die Induktivladeelektronik 70 weist eine Platine mit einer Bestückung auf einer der Induktivladespule 18 abgewandten Seite und eine Abschirmfläche auf einer der Induktivladespule 18 zugewandten Seite auf. Das Wärmeausgleichsmittel 68 ist dazu vorgesehen, die von der Induktivladeelektronik 70 ausgehende Erwärmung gleichmäßig auf die Akkuzellen 14 zu verteilen. Die Induktivladespule 18 empfängt eine elektrische Energie zu einer Aufladung der Akkuzellen 14.

Der Spulenträger 66 ist dazu vorgesehen, den Spulenkern 64 und die Induktivladespule 18 relativ zueinander anzuordnen. Die Induktivladespule 18 ist auf dem Spulenträger 66 aufgewickelt. Die Induktivladespule 18 umschließt den Spulenkern 64 auf einer Ebene. Der Spulenkern 64 ist aus einem ferromagnetischen Material, und zwar aus einem Ferrit. Der Spulenkern 64 ist mehrteilig, und zwar hier vierteilig, ausgebildet. Der Spulenkern 64 umfasst mehrere pizzastückförmige Teilstücke. Der Spulenkern 64 verbreitert sich von einer Spulenebene 74 aus gesehen in Richtung der Akkuzellen 14. Der Spulenkern 64 weist auf einer Ebene zwischen der Spulenebene 74 und der Induktivladeelektronik 70 eine größte Erstreckungsfläche 76 auf. Diese Erstreckungsfläche 76 weist eine größere Fläche auf als die Induktivladespule 18 auf der Spulenebene 74.

Die Induktivladeeinheit 16 weist ein Gehäuseteil 78 des Akkugehäuse 12 auf. Das Gehäuseteil 78 begrenzt den Handwerkzeugakku 10 auf der der Handwerkzeugschnittstelle 56 abgewandten Seite. Das Gehäuseteil 78 verbindet die anderen Bauteile zu einer Baugruppe. Die Induktivladeeinheit 16 wird als Baugruppe von einem Rest des Handwerkzeugakkus 10 getrennt elektronisch getestet.

Das Akkugehäuse 12 weist eine erste Gehäuseanformung 20 und eine zweite Gehäuseanformung 22 auf. Die Gehäuseanformungen 20, 22 sind dazu vorgesehen, den Handwerkzeugakku 10 bei einem Ladevorgang an der Induktivladevorrichtung 24 zu befestigen. Die Induktivladeseite 32 des Akkugehäuses 12 begrenzt Bereiche 26, 28 der ersten Gehäuseanformung 20 und einen Bereich 30 der zweiten Gehäuseanformung 22. Insbesondere bilden eine Außenfläche der ersten Gehäuseanformung 20 und eine Außenfläche der zweiten Gehäuseanformung 22 jeweils einen Teil der Induktivladeseite 32.

Die erste Gehäuseanformung 20 ist zur Befestigung in einer Richtung 34 parallel zu einer Wicklungsachse 36 der Induktivladespule 18 vorgesehen. Die erste Gehäuseanformung 20 weist einen ersten Befestigungsbereich 40 und einen zweiten Befestigungsbereich 42 auf, die an gegenüberliegenden Seiten der Induktivladeseite 32 des Akkugehäuses 12 angeordnet sind. Die Befestigungsbereiche 40, 42 sind flügelförmig ausgebildet. Die Befestigungsbereiche 40, 42 sind als Aufnahmeschultern ausgebildet. Die Befestigungsbereiche 40, 42 weisen eine schienenförmige Form auf. Die Induktivladespule 18 ist teilweise innerhalb der Befestigungsbereiche 40, 42 angeordnet. Innerhalb der Befestigungsbereiche 40, 42 sind als funktionelle Bauteile, und zwar als elektrisch funktionelle Bauteile, lediglich die Induktivladespule 18, der Spulenkern 64 und die Induktivladeelektronik 70 angeordnet.

Die zweite Gehäuseanformung 22 ist zur Befestigung in zwei Richtungen 38 senkrecht zu der Wicklungsachse 36 der Induktivladespule 18 vorgesehen und somit zur Positionierung der Induktivladespule 18 des Handwerkzeugakkus 10 relativ zu der Induktivladevorrichtung 24 für die Aufladung. Die zweite Gehäuseanformung 22 ist als eine großflächige Anformung an der Induktivladeseite 32 des Akkugehäuses 12 ausgebildet. Die zweite Gehäuseanformung 22 weist eine Erstreckung parallel zu der Wicklungsachse 36 der Induktivladespule 18 zwischen 0,5 mm und 2 mm auf, hier eine Erstreckung von 1,2 mm. Die zweite Gehäuseanformung 22 weist eine rechteckige Grundform mit abgerundeten Ecken auf. Formschlussflächen 44 der zweiten Gehäuseanformung 22 erstrecken sich entlang von Mantelflächen, deren Achsen parallel zu der der Wicklungsachse 36 ausgerichtet sind.

Die zweite Gehäuseanformung 22 weist Fremdkörperaufnahmeausnehmungen 46 auf, die zur Reduzierung eines Induktivladeabstands zwischen der Induktivladespule 18 des Handwerkzeugakkus 10 und der Induktivladevorrichtung 24 vorgesehen sind, wenn Fremdkörper zwischen dem Handwerkzeugakku 10 und der Induktivladevorrichtung 24 angeordnet sind. Die Fremdkörperaufnahmeausnehmungen 46 sind als von der zweiten Gehäuseanformung 22 begrenzte Aussparungen ausgebildet. Die Fremdkörperaufnahmeausnehmungen 46 weisen eine Tiefe von zwischen 0,7 mm und 1,5 mm auf, und zwar von hier 1 mm. Hier weisen die Fremdkörperaufnahmeausnehmungen 46 einen linienförmigen Verlauf auf. Alternativ könnten die Fremdkörperaufnahmeausnehmungen 46 einen anderen, dem Fachmann als sinnvoll erscheinenden Verlauf aufweisen, beispielsweise teilkreisförmige Teilverläufe.

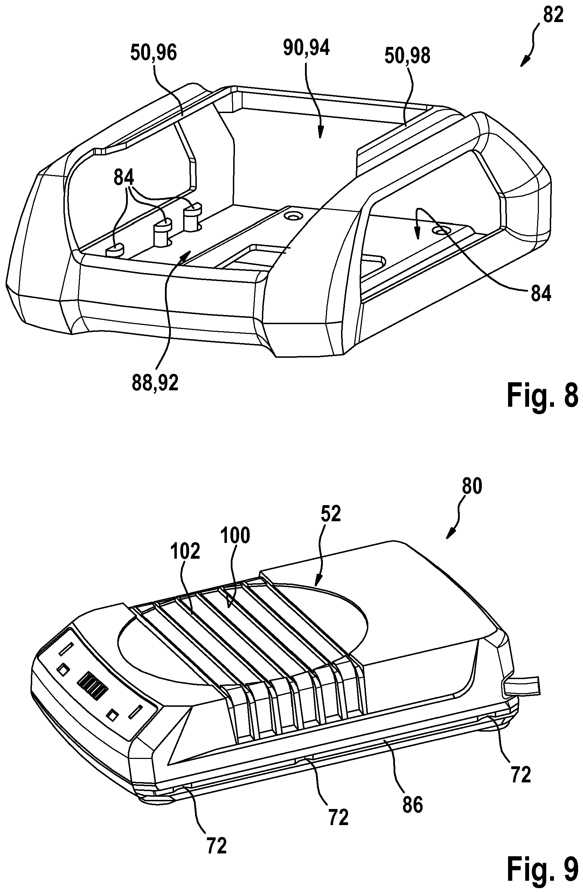

Die Induktivladevorrichtung 24 weist ein in Figur 9 dargestelltes Induktivladegerät 80 und eine in Figur 8 dargestellte Befestigungsvorrichtung 82 auf. Das Induktivladegerät 80 weist, hier nicht näher dargestellt, eine Ladeelektronik und eine Induktivladespule auf. Die Ladeelektronik des Induktivladegeräts 80 ist dazu vorgesehen, eine Wechselspannung zu erzeugen, deren Energie die Induktivladespule bei einem Ladevorgang an den Handwerkzeugakku 10 überträgt.

Die Befestigungsvorrichtung 82 ist rahmenförmig ausgebildet. Die Befestigungsvorrichtung 82 weist Koppelmittel 84 auf, die dazu vorgesehen sind, mit Koppelmitteln 86 des Induktivladegeräts 80 mechanisch zu koppeln. Die Koppelmittel 86 des Induktivladegeräts 80 sind als Nuten ausgebildet. Die Koppelmittel 86 weisen Vertiefungen 72 zur formschlüssigen Befestigung auf. Die Koppelmittel 84 der Befestigungsvorrichtung 82 sind als Anformungen ausgebildet, die dazu vorgesehen sind, in den Nuten zu laufen. Die Koppelmittel 84 der Befestigungsvorrichtung 82 sind angefedert. Die Koppelmittel 84 der Befestigungsvorrichtung 82 befestigen das Induktivladegerät 80 kraftschlüssig. Alternativ oder zusätzlich könnten die Koppelmittel 84 der Befestigungsvorrichtung 82 das Induktivladegerät 80 formschlüssig befestigen.

Die Befestigungsvorrichtung 82 weist eine erste Aufnahmeaussparung 88 auf, durch die der Handwerkzeugakku 10 durch den Bediener werkzeuglos in die Befestigungsvorrichtung 82 einbringbar ist. Die Befestigungsvorrichtung 82 weist eine zweite Aufnahmeaussparung 90 auf, durch die das Induktivladegerät 80 durch den Bediener werkzeuglos in die Befestigungsvorrichtung 82 einbringbar ist. Der Handwerkzeugakku 10 und das Induktivladegerät 80 sind von unterschiedlichen Seiten 92, 94 in die Befestigungsvorrichtung 82 einbringbar, und zwar von entgegengesetzten Seiten 92, 94.

Die Befestigungsvorrichtung 82 ist dazu vorgesehen, den Handwerkzeugakku 10 bei dem Ladevorgang an dem Induktivladegerät 80 zu befestigen. Dazu weist die Befestigungsvorrichtung 82 ein erstes Befestigungsmittel 50 der Induktivladevorrichtung 24 auf. Das Befestigungsmittel 50 der Befestigungsvorrichtung 82 weist einen ersten Befestigungsbereich 96 und einen zweiten Befestigungsbereich 98 auf, die dazu vorgesehen sind, die erste Gehäuseanformung 20 des Handwerkzeugakkus 10 kraftschlüssig und formschlüssig zu befestigen. Dazu drücken die Befestigungsbereiche 96, 98 des Befestigungsmittels 50 der Befestigungsvorrichtung 82 den Handwerkzeugakku 10 gegen das Induktivladegerät 80. Der erste Befestigungsbereich 96 und der zweite Befestigungsbereich 98 sind schienenförmig ausgebildet. Die Befestigungsvorrichtung 82 wird bei einem Einschieben des Handwerkzeugakkus 10 geringförmig verformt.

Das Induktivladegerät 80 der Induktivladevorrichtung 24 weist ein zweites Befestigungsmittel 52 der Induktivladevorrichtung 24 auf. Das zweite Befestigungsmittel 52 der Induktivladevorrichtung 24 ist dazu vorgesehen, den Handwerkzeugakku 10 mittels dessen zweiter Gehäuseanformung 22 für die Aufladung zu positionieren. Das zweite Befestigungsmittel 52 der Induktivladevorrichtung 24 ist als eine Vertiefung mit einer kreisförmigen Grundform innerhalb einer Induktivladeseite 100 des Induktivladegeräts 80 ausgebildet. Die zweite Gehäuseanformung 22 des Handwerkzeugakkus 10 und das zweite Befestigungsmittel 52 der Induktivladevorrichtung 24 weisen somit voneinander abweichende Grundformen auf. Die zweite Gehäuseanformung 22 des Handwerkzeugakkus 10 und das zweite Befestigungsmittel 52 der Induktivladevorrichtung 24 weisen in zumindest zwei Richtungen eine gleiche Erstreckung auf.

Das Befestigungsmittel 52 weist Fremdkörperaufnahmeausnehmungen 102 auf, die zur Reduzierung eines Induktivladeabstands zwischen der Induktivladespule 18 des Handwerkzeugakkus 10 und der Induktivladevorrichtung 24 vorgesehen sind, wenn Fremdkörper zwischen dem Handwerkzeugakku 10 und der Induktivladevorrichtung 24 angeordnet sind. Die Fremdkörperaufnahmeausnehmungen 102 weisen eine Tiefe von zwischen 0,5 mm und 1,5 mm auf, und zwar von hier 1 mm. Hier weisen die Fremdkörperaufnahmeausnehmungen 102 einen linienförmigen Verlauf auf. Alternativ könnten die Fremdkörperaufnahmeausnehmungen 102 einen anderen, dem Fachmann als sinnvoll erscheinenden Verlauf aufweisen, beispielsweise teilkreisförmige Teilverläufe. Die Fremdkörperaufnahmeausnehmungen 102 erstrecken sich bis zu an die Induktivladeseite 100 angrenzenden Seiten und sind dort offen ausgebildet. Fremdkörper können somit durch die Fremdkörperaufnahmeausnehmungen 102 aus einem Bereich zwischen dem Handwerkzeugakku 10 und dem Induktivladegerät 80 herauswandern, beispielsweise durch Vibrationen in einem Kraftfahrzeug.

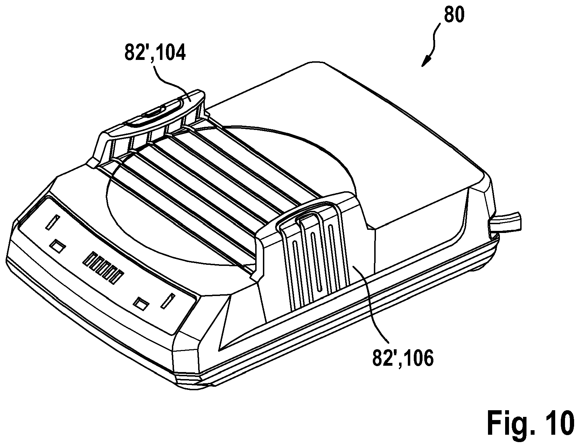

Figur 10 zeigt eine weitere Befestigungsvorrichtung 82' eines alternativen oder zusätzlichen Ausführungsbeispiels der Befestigungsvorrichtung 82 aus den Figuren 1 und 8 auf. Die weitere Befestigungsvorrichtung 82' weist zwei voneinander getrennt ausgebildete Befestigungselemente 104, 106 auf. Die zwei Befestigungselemente 104, 106 sind ohrenförmig ausgebildet. Die Befestigungselemente 104, 106 sind in den Fremdkörperaufnahmeausnehmungen 102 des Induktivladegeräts 80 befestigt. Die Befestigungselemente 104, 106 sind teilelastisch ausgebildet, wodurch eine Vermeidung einer Beschädigung der Befestigungselemente 104, 106 durch ein selbstständiges Lösen der Befestigungselemente 104, 106 erreicht werden kann.

## Patentansprüche

1. Handwerkzeugakku mit mindestens einem Akkugehäuse (12), mindestens einer Akkuzelle (14) und zumindest einer Induktivladeeinheit (16), die zumindest eine Induktivladespule (18) zu einer Aufladung der mindestens einen Akkuzelle (14) aufweist, wobei das Akkugehäuse (12) zumindest eine Gehäuseanformung (20, 22) aufweist, die zumindest teilweise von einem Bereich (26, 28, 30) einer Induktivladeseite (32) des Akkugehäuses (12) begrenzt ist, wobei die Induktivladespule (18) zumindest teilweise innerhalb der ersten Gehäuseanformung (20) angeordnet ist, **dadurch gekennzeichnet, dass** die Gehäuseanformung (20,
22) als eine erste Gehäuseanformung (20) ausgebildet ist und zumindest einen ersten Bereich (26) und einen zweiten Bereich (28) aufweist, die an gegenüberliegenden Seiten der Induktivladeseite (32) von der Induktivladeseite begrenzt sind.

2. Handwerkzeugakku nach Anspruch 1, **dadurch gekennzeichnet, dass** die erste Gehäuseanformung (20) zumindest einen ersten Bereich (40) und einen zweiten Bereich (42) aufweist, die an gegenüberliegenden Seiten einer Induktivladeseite (32) des Akkugehäuses (12) angeordnet sind.

3. Handwerkzeugakku nach Anspruch 1 oder 2, **dadurch gekennzeichnet, dass** die Gehäuseanformung (20, 22) zur Befestigung an einer Induktivladevorrichtung (24) vorgesehen ist.

4. Handwerkzeugakku nach einem der vorhergehenden Ansprüche, **dadurch gekennzeichnet, dass** die erste Gehäuseanformung (20) zur Befestigung in einer Richtung (34) parallel zu einer Wicklungsachse (36) der Induktivladespule (18) ausgebildet ist.

5. Handwerkzeugakku nach einem der vorhergehenden Ansprüche, **dadurch gekennzeichnet, dass** die Gehäuseanformung (20, 22) als eine zweite Gehäuseanformung (22) ausgebildet ist, die zur Befestigung in zumindest einer Richtung (38) senkrecht zu der Wicklungsachse (36) der Induktivladespule (18) vorgesehen ist.

6. Handwerkzeugakku nach Anspruch 5, **dadurch gekennzeichnet, dass** das Akkugehäuse (12) die erste Gehäuseanformung (20) und die zweite Gehäuseanformung (22) aufweist.

7. Handwerkzeugakku nach einem der vorhergehenden Ansprüche, **dadurch gekennzeichnet, dass** die erste Gehäuseanformung (20) zumindest einen ersten Befestigungsbereich (40) und einen zweiten Befestigungsbereich (42) aufweist, die an gegenüberliegenden Seiten einer Induktivladeseite (32) des Akkugehäuses (12) angeordnet sind.

8. Handwerkzeugakku nach Anspruch 7, **dadurch gekennzeichnet, dass** der erste Befestigungsbereich (40) und/oder der zweite Befestigungsbereich (42) als Aufnahmeschultern ausgebildet ist/sind.

9. Handwerkzeugakku nach Anspruch 7 oder 8, **dadurch gekennzeichnet, dass** der erste Befestigungsbereich (40) und/oder der zweite Befestigungsbereich (42) flügelförmig ausgebildet ist/sind.

10. Handwerkzeugakku nach einem der Ansprüche 7 bis 9, **dadurch gekennzeichnet, dass** der erste Befestigungsbereich (40) und/oder der zweite Befestigungsbereich (42) schienenförmig ausgebildet ist/sind.

11. Handwerkzeugakku zumindest nach Anspruch 5, **dadurch gekennzeichnet, dass** die zweite Gehäuseanformung (22) dazu vorgesehen ist, zumindest die Induktivladespule (18) für die Aufladung zu positionieren.

12. Handwerkzeugakku zumindest nach Anspruch 5, **dadurch gekennzeichnet, dass** die zweite Gehäuseanformung (22) zumindest eine Formschlussfläche (44) aufweist, die sich zumindest im Wesentlichen entlang einer Mantelfläche erstreckt.

13. Handwerkzeugakku zumindest nach Anspruch 5, **dadurch gekennzeichnet, dass** die zweite Gehäuseanformung (22) zumindest eine Fremdkörperaufnahmeausnehmung (46) aufweist, die zur Reduzierung eines Induktivladeabstands vorgesehen ist.

14. System mit einem Handwerkzeugakku (10) nach einem der vorhergehenden Ansprüche und einer Induktivladevorrichtung (24).

15. System nach Anspruch 14, **dadurch gekennzeichnet, dass** die Induktivladevorrichtung (24) zumindest ein erstes Befestigungsmittel (50) aufweist, das dazu vorgesehen ist, die erste Gehäuseanformung (20) des Handwerkzeugakkus (10) kraftschlüssig und/oder formschlüssig zu befestigen.

16. System zumindest nach einem der Ansprüche 14 oder 15, **dadurch gekennzeichnet, dass** die Induktivladevorrichtung (24) zumindest ein zweites Befestigungsmittel (52) aufweist, das dazu vorgesehen ist, den Handwerkzeugakku (10) mittels dessen zweiter Gehäuseanformung (22) für die Aufladung zu positionieren.

17. System zumindest nach Anspruch 16, **dadurch gekennzeichnet, dass** die zweite Gehäuseanformung (22) des Handwerkzeugakkus (10) und das zweite Befestigungsmittel (52) der Induktivladevorrichtung (24) voneinander abweichende Grundformen aufweisen.

## Claims

1. Handheld tool rechargeable battery comprising at least one rechargeable battery housing (12), at least one rechargeable battery cell (14) and at least one inductive charging unit (16) which has at least one inductive charging coil (18) for charging the at least one rechargeable battery cell (14), wherein the rechargeable battery housing (12) has at least one housing integrally formed portion (20, 22) which is delimited at least partially by a region (26, 28, 30) of an inductive charging side (32) of the rechargeable battery housing (12), wherein the inductive charging coil (18) is arranged at least partially within the first housing integrally formed portion (20), **characterized in that** the housing integrally formed portion (20, 22) is in the form of a first housing integrally formed portion (20) and has at least a first region (26) and a second region (28) which are delimited on opposite sides of the inductive charging side (32) by the inductive charging side.

2. Handheld tool rechargeable battery according to Claim 1, **characterized in that** the first housing integrally formed portion (20) has at least a first region (40) and a second region (42) which are arranged on opposite sides of an inductive charging side (32) of the rechargeable battery housing (12).

3. Handheld tool rechargeable battery according to Claim 1 or 2, **characterized in that** the housing integrally formed portion (20, 22) is provided for fastening to an inductive charging apparatus (24).

4. Handheld tool rechargeable battery according to one of the preceding claims, **characterized in that** the first housing integrally formed portion (20) is designed for fastening in a direction (34) parallel to a winding axis (36) of the inductive charging coil (18).

5. Handheld tool rechargeable battery according to one of the preceding claims, **characterized in that** the housing integrally formed portion (20, 22) is in the form of a second housing integrally formed portion (22) which is provided for fastening in at least one direction (38) perpendicular to the winding axis (36) of the inductive charging coil (18).

6. Handheld tool rechargeable battery according to Claim 5, **characterized in that** the rechargeable battery housing (12) has the first housing integrally formed portion (20) and the second housing integrally formed portion (22).

7. Handheld tool rechargeable battery according to one of the preceding claims, **characterized in that** the first housing integrally formed portion (20) has at least a first fastening region (40) and a second fastening region (42) which are arranged on opposite sides of an inductive charging side (32) of the rechargeable battery housing (12).

8. Handheld tool rechargeable battery according to Claim 7, **characterized in that** the first fastening region (40) and/or the second fastening region. (42) are/is in the form of receiving shoulders.

9. Handheld tool rechargeable battery according to Claim 7 or 8, **characterized in that** the first fastening region (40) and/or the second fastening region (42) are/is of vane-like design.

10. Handheld tool rechargeable battery according to one of Claims 7 to 9, **characterized in that** the first fastening region (40) and/or the second fastening region (42) are/is of rail-like design.

11. Handheld tool rechargeable battery at least according to Claim 5, **characterized in that** the second housing integrally formed portion (22) is provided for positioning at least the inductive charging coil (18) for charging purposes.

12. Handheld tool rechargeable battery at least according to Claim 5, **characterized in that** the second housing integrally formed portion (22) has at least one interlocking connection surface (44) which extends at least substantially along a casing surface.

13. Handheld tool rechargeable battery at least according to Claim 5, **characterized in that** the second housing integrally formed portion (22) has at least one foreign body receiving recess (46) which is provided for reducing an inductive charging distance.

14. System comprising a handheld tool rechargeable battery (10) according to one of the preceding claims and an inductive charging apparatus (24).

15. System according to Claim 14, **characterized in that** the inductive charging apparatus (24) has at least one first fastening means (50) which is provided for fastening the first housing integrally formed portion (20) of the handheld tool rechargeable battery (10) in a force-fitting and/or interlocking manner.

16. System at least according to either of Claims 14 and 15, **characterized in that** the inductive charging apparatus (24) has at least one second fastening means (52) which is provided for positioning the handheld tool rechargeable battery (10) by means of its second housing integrally formed portion (22) for charging purposes.

17. System at least according to Claim 16, **characterized in that** the second housing integrally formed portion (22) of the handheld tool rechargeable battery (10) and the second fastening means (52) of the inductive charging apparatus (24) have basic shapes which differ from one another.

## Revendications

1. Accumulateur pour outil portatif, comprenant au moins un boîtier d'accumulateur (12), au moins une cellule d'accumulateur (14) et au moins une unité de charge inductive (16), laquelle possède au moins une bobine de charge inductive (18) pour une charge de l'au moins une cellule d'accumulateur (14), le boîtier d'accumulateur (12) possédant au moins un façonnage de boîtier (20, 22), lequel est délimité au moins partiellement par une zone (26, 28, 30) d'un côté de charge inductive (32) du boîtier d'accumulateur (12), la bobine de charge inductive (18) étant disposée au moins partiellement à l'intérieur du premier façonnage de boîtier (20), **caractérisé en ce que** le façonnage de boîtier (20, 22) est réalisé sous la forme d'un premier façonnage de boîtier (20) et possède au moins une première zone (26) et une deuxième zone (28) qui sont délimitées par le côté de charge inductive sur les côtés opposés du côté de charge inductive (32).

2. Accumulateur pour outil portatif selon la revendication 1, **caractérisé en ce que** le premier façonnage de boîtier (20) possède au moins une première zone (40) et une deuxième zone (42) qui sont disposées sur les côtés opposés d'un côté de charge inductive (32) du boîtier d'accumulateur (12)

3. Accumulateur pour outil portatif selon la revendication 1 ou 2, **caractérisé en ce que** le façonnage de boîtier (20, 22) est conçu pour la fixation à un dispositif de charge inductive (24).

4. Accumulateur pour outil portatif selon l'une des revendications précédentes, **caractérisé en ce que** le premier façonnage de boîtier (20) est configuré pour une fixation dans une direction (34) parallèle à un axe d'enroulement (36) de la bobine de charge inductive (18).

5. Accumulateur pour outil portatif selon l'une des revendications précédentes, **caractérisé en ce que** le façonnage de boîtier (20, 22) est réalisé sous la forme d'un deuxième façonnage de boîtier (22) qui est conçu pour une fixation dans au moins une direction (38) perpendiculaire à l'axe d'enroulement (36) de la bobine de charge inductive (18).

6. Accumulateur pour outil portatif selon la revendication 5, **caractérisé en ce que** le boîtier d'accumulateur (12) possède le premier façonnage de boîtier (20) et le deuxième façonnage de boîtier (22).

7. Accumulateur pour outil portatif selon l'une des revendications précédentes, **caractérisé en ce que** le premier façonnage de boîtier (20) possède au moins une première zone de fixation (40) et une deuxième zone de fixation (42), lesquelles sont disposées sur des côtés opposés du côté de charge inductive (32) du boîtier d'accumulateur (12).

8. Accumulateur pour outil portatif selon la revendication 7, **caractérisé en ce que** la première zone de fixation (40) et/ou la deuxième zone de fixation (42) est/sont réalisées sous la forme d'épaulements d'accueil.

9. Accumulateur pour outil portatif selon la revendication 7 ou 8, **caractérisé en ce que** la première zone de fixation (40) et/ou la deuxième zone de fixation (42) est/sont réalisées en forme d'aile.

10. Accumulateur pour outil portatif selon l'une des revendications 7 à 9, **caractérisé en ce que** la première zone de fixation (40) et/ou la deuxième zone de fixation (42) est/sont réalisées en forme de rail.

11. Accumulateur pour outil portatif selon au moins la revendication 5, **caractérisé en ce que** le deuxième façonnage de boîtier (22) est conçu pour positionner au moins la bobine de charge inductive (18) pour la charge.

12. Accumulateur pour outil portatif selon la revendication 5, **caractérisé en ce que** le deuxième façonnage de boîtier (22) possède au moins une surface à complémentarité de formes (44) qui s'étend au moins sensiblement le long d'une surface d'enveloppe.

13. Accumulateur pour outil portatif selon la revendication 5, **caractérisé en ce que** le deuxième façonnage de boîtier (22) possède au moins une cavité d'accueil de corps étranger (46) qui est conçue pour réduire l'écart de charge inductive.

14. Système comprenant un accumulateur pour outil portatif (10) selon l'une des revendications précédentes et un dispositif de charge inductive (24).

15. Système selon la revendication 14, **caractérisé en ce que** le dispositif de charge inductive (24) possède au moins un premier moyen de fixation (50) qui est conçu pour fixer le premier façonnage de boîtier (20) de l'accumulateur pour outil portatif (10) par force et/ou par complémentarité de formes.

16. Système selon l'une des revendications 14 ou 15, **caractérisé en ce que** le dispositif de charge inductive (24) possède au moins un deuxième moyen de fixation (52) qui est conçu pour positionner l'accumulateur pour outil portatif (10) pour la charge au moyen de son deuxième façonnage de boîtier (22).

17. Système selon la revendication 16, **caractérisé en ce que** le deuxième façonnage de boîtier (22) de l'accumulateur pour outil portatif (10) et le deuxième moyen de fixation (52) du dispositif de charge inductive (24) présentent des formes de base différentes l'une de l'autre.
